# EUROPÄISCHE PATENTSCHRIFT

(11) **EP 0 741 149 B1**
(45) Veröffentlichungstag und Bekanntmachung des Hinweises auf die Patenterteilung: **14.07.1999**
(21) Anmeldenummer: 96106523.2
(22) Anmeldetag: 25.04.1996
(51) Int. Cl.: C08F 220/04, C09D 133/02, C09J 133/02

(54) **Neue niedermolekulare OH-funktionelle Copolymerisate mit hoher Seitenkettenverzweigung, Verfahren zu ihrer Herstellung sowie ihre Verwendung**
Copolymers with OH functions, with low molecular weight and high side chain branching, process for their preparation, and their use
Copolymères de bas poids moléculaire ayant des functions -OH et un degré de ramification élevé des chaînes latérales, leur procédé de préparation et leur usage.

(30) Priorität: 02.05.1995 DE 19515919
(43) Veröffentlichungstag der Anmeldung: 06.11.1996
(73) Patentinhaber: HOECHST AKTIENGESELLSCHAFT, 65926 Frankfurt am Main (DE)
(72) Erfinder: Epple, Ulrich, Dr., 8047 Graz (AT); Kubillus, Uwe, Dr., 65195 Wiesbaden (DE); Oswald, Harald, 65719 Hofheim (DE)
(74) Vertreter: Zounek, Nikolai, Dipl.-Ing.

(56) Entgegenhaltungen:
- EP-A- 0 027 931
- EP-A- 0 635 523
- EP-A- 0 638 591

## Beschreibung

Acrylatharze sind Polymere, die z.B. in der Beschichtungstechnik als Bindemittel für witterungsbeständige, transparente Klar- und pigmentierte Lacke zum Einsatz kommen. Sie sind auch in der Klebstoff- und Dichtungsmassen- inkl. Füllstoffindustrie als Rohstoff vielfach im Einsatz. Die heute benutzten Systeme weisen meist einen hohen Gehalt an Lösemitteln bei der Applikation auf. Zur Schonung der Umwelt ist eine Verringerung der Emission organischer Verbindungen - insbesondere die Lösemittelmenge - anzustreben.

Um festkörperreiche ("high solid") Beschichtungssysteme, Klebstoffe und Dichtungsmassen zu erhalten, müssen diese Acrylatharze mit niedriger Viskosität, d.h. geringen Molmassen eingesetzt werden.

Es ist wohl bekannt, daß zur Herstellung niedrigviskoser Polymerisate die radikalische Lösemittelpolymerisation mit oder ohne Reglereinsatz bzw. die Substanzpolymerisation verwendet werden kann (EP-A-0 408 858, EP-A-0 398 387, US-A 4,145,513, US-A 4,350,809, US-A 4,710,556, EP-A-0 635 523, DE-P 4442769). Auch bekannt ist, daß solche Produkte mit zu bisherigen Systemen vergleichbaren Trocknungseigenschaften, Klebfreiheiten, Chemikalienbeständigkeiten und Pigmentbenetzungseigenschaften mit speziellen sterisch anspruchsvollen Monomeren zu erhalten sind (EP-A-0 638 591, DE-P 4415319, DE-P 4435950).

Nachteilig ist nur, daß diese speziellen Monomeren heute noch teuer sind und deshalb solche Systeme meist nur zum Einsatz kommen, wo der gesetzliche Druck (z.B. "VOC regulations" ("volatile organic compounds") in USA und Großbritannien und "TA Luft" in Deutschland) vorhanden ist.

Dieser länderspezifische gesetzliche Druck wird zum Teil schärfer bzw. schwächer ausgeübt. Der Gesetzgeber läßt hierbei unterschiedliche Bewertungen (Einzelbetrachtungen, Kombinationsbetrachtungen) zu, die den Anbieter solcher Beschichtungs-, Klebstoff- bzw. Dichtstoffprodukte zu neuen, unterschiedlichen technischen Leistungen zwingen. Dies geht so weit, daß das gewohnt hohe Leistungsniveau solcher Produkte aus Umweltgesichtspunkten auf ein Mindestniveau gekürzt werden muß.

Klarlacke als unpigmentierte Systeme werden z.B. in der Autoreparatur als oberste Schicht eingesetzt. Sie haben die Funktion, die pigmentierte untere Schicht ("base coat") gegen mechanische Einwirkung, gegen Witterungseinflüsse und gegen Schmutz zu schützen und der Gesamtlackierung den nötigen Glanz zu geben. Dieser Klarlack wurde vorwiegend mit polymeren Bindemitteln formuliert, die meist gleichzeitig auch als pigmentierte Decklacke zum Einsatz gekommen sind. Durch die scharfen VOC regulations wird der Rohstoffhersteller jedoch gezwungen, diesen Klarlack separat z.T. mit Zumischung von niedermolekularen Polyolen als "Blend-Systeme" (EP-A-0 588 314, EP-A-0 129 124, US-A 5,098,956) zu formulieren.

Die EP-A-0 588 314 beschreibt ein Überzugsmittel basierend auf einer Mischung von Poly(meth)acrylatpolyolen, die aus der Komponente A mit einer gewichtsmittleren molaren Masse M_{w} von 3000 bis 5000 g/mol (Gelpermeationschromatographie, Polystyrol als Standard) und der Komponente B mit einer gewichtsmittleren molaren Masse M_{w} von 5000 bis 8000 g/mol besteht. Die Blendkomponenten in der EP-A-0 588 314 unterscheiden sich deutlich in ihrem strukturellen Aufbau von den Poly(meth)acrylatpolyolkomponenten der vorliegenden Erfindung.

Die EP-A 0 129 124 beschreibt eine Überzugsmasse, die zwei Acrylatpolymerisate A und B als Bindemittel sowie aliphatische und/oder cycloaliphatische Polyisocyanate enthält. Copolymerisat A ist ein Acrylsäureestercopolymer mit einer gewichtsmittleren molaren Masse von 800 bis 4000 g/mol, einer OH-Zahl von 80 bis 180 mg/g und einer Glasübergangstemperatur unterhalb von -10 °C. Copolymerisat B ist ein Methacrylsäureestercopolymerisat mit einer gewichtsmittleren molaren Masse von 3000 bis 10000 g/mol, einer OH-Zahl von 40 bis 120 mg/g und einer Glasübergangstemperatur von -10 °C bis +70 °C. Die Copolymerisate A bzw. B werden in Lösemitteln hergestellt. Im Gegensatz hierzu sind die in dieser Erfindung eingesetzten Blendkomponenten Substanzpolymerisate mit einem sich während der Polymerisation bildenden eingebauten Monomerenbaustein, der in der EP-A 0 129 124 nicht beschrieben ist.

In der US-A 5,098,956 werden Polyolblends mit einer Acrylatcopolymerkomponente beschrieben, die eine niedrige Glasübergangstemperatur (ca. -10 °C bis ca. 20 °C), eine OH-Zahl von ca. 112 bis 187 mg/g und eine zahlenmittlere molare Masse Mₙ von ca. 1500 bis 6000 g/mol mit einer Uneinheitlichkeit U = M_{w} / Mₙ von kleiner oder gleich ca. 5 sowie einer Acrylatcopolymerkomponente, die eine hohe Glasstufe (ca. +25 °C bis +100 °C), eine OH-Zahl von ca. 35 bis 112 mg/g, eine zahlenmittlere molare Masse von ca. 2000 bis 8000 g/mol und Uneinheitlichkeiten von kleiner oder gleich ca. 5 aufweisen. In der US-A 5,098,956 findet sich jedoch kein Hinweis auf den erfindungsgemäßen während der Polymerisation gebildeten verzweigten Monomerenbaustein, der in den hier beschriebenen Blendkomponenten eine entscheidende Rolle spielt. Außerdem offenbart die US-A 5,098,956 keine "in situ" Blends, da die OH-Zahlen der verwendeten Copolymerisate unterschiedlich sind.

Bekannt sind auch sehr komplexe Bindemittel-Systeme, die Mischungen von oligomeren Caprolactonpolyolen, also Polyesterpolyolen mit Acrylatpolyolen und/oder Acrylatsternpolymeren enthalten (WO 92/22618). Hierbei findet man bei den Acrylatpolyolen keinen Hinweis auf den schon mehrfach erwähnten besonderen strukturellen Baustein dieser Erfindung.

Auch werden definierte organische Verbindungen, wie z.B. Asparaginsäurederivate, Aldimine, Ketimine oder Oxazolidine (EP-A-0 470 461, EP-A-0 403 921, US-A 5,214,086, "High performance polyurethane coatings systems utilizing oxazolidine based reactive diluents" G.N. Robinson, T.L. Johnson, M.D. Hoffman, 21st Higher Solids and Waterborne Coatings Symposium (Feb. 1994) New Orleans, LA, USA) als Reaktivverdünner-Systeme bzw. als Alleinbindemittel beschrieben.

Für den Klarlack in der Fahrzeugreparaturlackierung werden in Kalifornien z.B. max. 3,5 lb/gal (0,42 kg/dm³) flüchtige organische Bestandteile zugelassen, d.h. ca. 59 % Feststoffmassenanteil im Lack (DIN 4-Becher, 21 s Ausflußzeit bei 23 °C). Dies verschärft sich bei Applikation eines konventionellen "base coats" dahingehend, daß der darüberliegende Klarlack eine VOC-Grenze von 2,1 lb/gal (0,25 kg/dm³, d.h. ca. 75 % Feststoffmassenanteil) nicht überschreiten darf. Wichtige verarbeitungstechnische Eigenschaften gehen beim Einsatz von extrem niedermolekularen Polyolen verloren, wie z.B. die schnelle Trocknung. Beim Einsatz der oben erwähnten definierten organischen Verbindungen ist eine lange Topfzeit (Verarbeitungszeit) nicht gewährleistet. Auch beobachtet man meist ein Anlösen des "base coats" bzw. Hautbildung, z.T. Trübung und Ausgasungen bei den schnellen Reaktiwerdünner-Systemen. Das ursprüngliche Ziel, die Bindemittel neben dem unpigmentierten auch in pigmentierten Systemen einsetzen zu können, wird hierbei auch aufgegeben.

Aufgabe der vorliegenden Erfindung war es daher, umweltfreundlichere Bindemittel-Systeme mit einem niedrigen Lösemittelgehalt zu entwickeln, die eine schnelle Trocknung, eine lange Topfzeit, kein oder nur geringes Anlösen des "base coats", keine Hautbildung, Trübungen oder Ausgasungen ergeben und den universellen Einsatz in unpigmentierten und pigmentierten Systemen ermöglichen.

Überraschenderweise wurde gefunden, daß durch den Einsatz von speziellen Strukturen in den Bausteinen von Polyacrylatpolyolen solche Bindemittel-Systeme mit den oben genannten Eigenschaften entwickelt werden können.

Gegenstand der Erfindung sind mithin extrem niedermolekulare Copolymere (a) als Mischungskomponente, herstellbar durch Umsetzung von
(aa) einem oder mehreren Glycidylestern von gesättigten aliphatischen Monocarbonsäuren mit einem tertiären oder quarternären α-C-Atom, und
(ab) mindestens zwei ungesättigten copolymerisierbaren Monomeren, von denen mindestens eines mindestens eine COOH-Gruppe enthält, unter den Bedingungen einer radikalischen Copolymerisation, dadurch gekennzeichnet, daß die gewichtsmittlere molare Masse der Copolymere unter 3500 g/mol ist und der Massenanteil an verzweigten Seitenketten im Copolymer mindestens 20 % beträgt.

Als seitenkettenverzweigte Bausteine werden solche olefinisch ungesättigten, copolymerisierbaren Monomere bezeichnet, die mindestens ein tertiäres oder quaternäres aliphatisches Kohlenstoffatom aufweisen.

Gegenstand der Erfindung sind Bindemittel-Systeme, die diese extrem niedermolekulare Polyacrylatpolyole (a) mit einem Massenanteil von mindestens 20 % an seitenkettenverzweigten Bausteinen enthalten. In den erfindungsgemäßen Bindemittelsystemen können Massenanteile von 5 bis 95 % dieser extrem niedermolekularen Polyacrylatpolyole (a) mit 95 bis 5 % anderer Bindemittel (b) gemischt vorliegen. Bevorzugt werden dabei solche Bindemittelsysteme, in denen die chemische Zusammensetzung der Bindemittelkomponente (b) gleich oder ähnlich der der Komponente (a) ist. Besonders bevorzugt lassen sich die Mischungen von (a) und (b) "in situ" herstellen, das bedeutet, aus derselben Monomermischung, wobei die Reaktionsbedingungen so gewählt werden, daß eine Mischung aus extrem niedermolekularer Polymer-Komponente (a) und einer höhermolekularen Polymer-Komponente (b) entsteht. Dies läßt sich beispielsweise durch geeignete Temperaturführung erreichen, wie weiter unten ausgeführt wird.

Die in den erfindungsgemäßen Bindemittel-Systemen enthaltenen extrem niedermolekularen Polyacrylatpolyole (a) mit einem Massenanteil von mindestens 20 % an seitenkettenverzweigten Verbindungen sind gekennzeichnet durch eine gewichtsmittlere molare Masse unter 3500, bevorzugt unter 3300 und insbesondere bevorzugt unter 3000 g/mol. Bei den erfindungsgemäßen niedermolekularen Polyacrylatpolyolen ist die Zahl der freien Kettenenden pro Einheitsvolumen sehr groß. Zudem besitzen solche Polymere auch Ketten mit verminderter bzw. geringer Funktionalität. Dies äußert sich in geringer Filmhärte und extrem langen Trocknungszeiten. Solche Systeme als Alleinbindemittel mit Härtungsreagenzien führen meist zu klebrigen Lackfilmen. Als kompatible Blendkomponente zu höhermolekularen Polyacrylatharzen oder Polyesterharzen ähnlicher struktureller Zusammensetzung können sie jedoch zur Erhöhung des Feststoffgehaltes dienen. Solche Bindemittelmischungen weisen ausreichende Trocknungseigenschaften im Lackfilm auf. Diese transparenten Blends können entweder klassisch durch separate Herstellung und anschließender physikalischer Mischung hergestellt werden oder insbesondere im Falle von Polyacrylatharzen "in situ", d.h. durch drastische Änderung der Reaktionsparameter, wie z.B. der Monomerenkonzentration (inkl. Vorprodukte), der Reaktionstemperatur bzw. des Reaktionsdrucks. Die Änderung der Monomerenkonzentration schließt auch die Zugabe weiterer Monomeren (inkl. Vorprodukte) mit ein. Die "in situ"-Herstellung hat den Vorteil der geringeren Fertigungskosten.

Derartige Blends als Bindemittel führen dann in Klarlackbeschichtungsmitteln ohne bzw. mit üblichen Katalysatoren und Additiven zu Lackfeststoff-Massenanteilen von bis zu ca. 67 % (DIN 4-Becher, 21 s, 23 °C), bei ausreichenden Staub- und Klebfreiheiten.

Die extrem niedermolekularen Polyacrylat-Polyole (a) sind herstellbar durch Umsetzung von
(aa) einem oder mehreren Glycidylestern von gesättigten aliphatischen Monocarbonsäuren mit einem tertiären oder quaternären α-C-Atom, und
(ab) mindestens zwei ungesättigten copolymerisierbaren Monomeren, von denen mindestens eines mindestens eine COOH-Gruppe enthält, unter den Bedingungen einer radikalischen Copolymerisation,
wobei das gebildete Polymere einen Massenanteil von mindestens 20 % an Bausteinen mit verzweigten Seitenketten aufweist, bevorzugt einen Anteil von mindestens 25 %, und besonders bevorzugt von mindestens 30 %.

Insbesondere erhält man vorteilhafte Produkte im Sinne der Erfindung, wenn jeweils Massenanteile von
(aa) 20 bis 50 % 7 bis 33 C-Atome enthaltenden Glycidylestern aliphatischer gesättigter Monocarbonsäuren mit einem tertiären oder quaternären α-C-Atom und
(ab) 80 bis 50 % von mindestens zwei ungesättigten copolymerisierbaren Monomeren, von denen mindestens eines mindestens eine COOH-Gruppe enthält,
unter den Bedingungen der radikalischen Copolymerisation umgesetzt werden, wobei mindestens die Komponente (aa), der Glycidylester, vorgelegt und bei 210 bis 260 °C mit der Komponente (ab) und mindestens einem radikalischen Initiator in einer Substanzpolymerisation so lange umgesetzt wird, bis ein Umsetzungsgrad von mindestens 95, vorzugsweise mindestens 97,5 % erreicht ist, und die Komponente (ab) mindestens einen Massenanteil von 2,0 % eines mindestens eine COOH-Gruppe aufweisenden Monomeren enthält.

Bindemittelmischungen, die solche extrem niedermolekularen Polyacrylate und entsprechend OH-funktionelle Copolymerisate wie in US-A 4,145,513, US-A 4,350,809, US-A 4,710,556, EP-A-0 635 523, DE-P 44 42 769 bzw. EP-A-0 638 591, DE-P 44 15 319 und DE-P 44 35 950 beschrieben enthalten, sind homogen mischbar und kompatibel auf Grund gleicher struktureller Bausteine und ergeben bei der Härtung transparente, klare Lackfilme mit Feststoff-Massenanteilen bis ca. 67 % (DIN 4-Becher, 21 s, 23 °C).

Insbesondere sind vorteilhaft Gemische aus Massenanteilen von
(a) 5 bis 95 % der oben genannten niedermolekularen Copolymeren mit
(b) 95 bis 5 % gleich oder ähnlich zusammengesetzten Copolymeren mit einer gewichtsmittleren molaren Masse größer als 3500 g/mol, deren Monomere Massenanteile von
(ba) 5 bis 50 % Glycidylestern mit 7 bis 33 C-Atomen von aliphatischen gesättigten Monocarbonsäuren mit einem tertiären oder quaternären α-C-Atom und
(bb) 95 bis 50 % von mindestens zwei ungesättigten copolymerisierbaren Monomeren, von denen mindestens eines mindestens eine COOH-Gruppe enthält,
aufweisen, die unter den Bedingungen einer radikalischen Copolymerisation miteinander umgesetzt werden, wobei die Summe der Massenanteile jeweils 100 % beträgt.

Bevorzugt werden solche Bindemittel-Mischungen "in situ" hergestellt. Hierzu wird die Umsetzung nacheinander bei mindestens zwei verschiedenen Reaktionstemperaturen vorgenommen, also während eines Zeitintervalls t₁ bei der Temperatur T₁ und (nach der Heiz- bzw. Kühlphase auf die neue Temperatur) anschließend weiter während eines Zeitintervalls t₂ bei der Temperatur T₂ etc. Dabei kann so verfahren werden, daß zunächst bei der oben genannten höheren Temperatur von 210 bis 260 °C umgesetzt wird und anschließend auf eine Temperatur unter 210 °C, also 100 bis 210 °C, bevorzugt 120 bis 190 °C abgekühlt wird. Die Reaktion wird dann bei der niedrigeren Temperatur bis zum Erreichen des gewünschten Umsatzes weitergeführt. Eine andere Möglichkeit ist, die Reaktion zunächst bei einer niedrigeren Temperatur durchzuführen und nach dem Aufheizen anschließend bei einer höheren Temperatur weiterreagieren zu lassen. Die Anzahl der Zeitintervalle muß dabei mindestens zwei betragen. Sie ist nach oben unbeschränkt, wird jedoch wegen der praktischen Durchführbarkeit üblicherweise zwei bis vier betragen. Die jeweilige Dauer der Zeitintervalle kann entsprechend den gewünschten Anteilen in der Mischung variiert werden. Bei mehr als zwei Zeitintervallen bzw. Reaktionstemperaturen können die Temperaturen Glieder einer steigenden oder fallenden Folge sein, sie können jedoch auch wellenförmig geändert werden (z.B. hoch - niedrig - hoch).

Vorteilhaft erhält man erfindungsgemäße Gemische durch Umsetzung von
(aa) einem oder mehreren Glycidylestern von gesättigten aliphatischen Monocarbonsäuren mit einem tertiären oder quarternären α-C-Atom, und
(ab) mindestens zwei ungesättigten copolymerisierbaren Monomeren, von denen mindestens eines mindestens eine COOH-Gruppe enthält,
unter den Bedingungen einer radikalischen Copolymerisation, dadurch gekennzeichnet, daß die gesamte Umsetzungszeit in mindestens zwei Zeitintervalle geteilt wird, wobei in jedem Zeitintervall konstante Reaktionstemperaturen eingestellt werden, und insgesamt mindestens zwei verschiedene Reaktionstemperaturen angewandt werden, und mindestens eine Reaktionstemperatur zwischen 210 °C und 260 °C liegt. Die Zeitintervalle können beliebig groß gewählt werden.

Es ist gleichfalls im Rahmen der Erfindung möglich, die Zusammensetzung der Monomeren während der Dauer der Umsetzung durch kontinuierliches oder diskontinuierliches Zudosieren von einzelnen Komponenten oder deren Mischungen zu ändern. Ebenso ist es möglich und je nach Wahl der Reaktionstemperaturen auch zum Teil erforderlich, unterschiedliche radikalische Initiatoren bei den unterschiedlichen Reaktionstemperaturen einzusetzen.

Als Komponente (aa) werden Glycidylester von α-Alkylalkanmonocarbonsäuren und/oder α,α-Dialkylalkanmonocarbonsäuren einzeln oder im Gemisch verwendet. Da dem Glycidylrest im Glycidylester der α-Alkylalkanmonocarbonsäuren und/oder α,α-Dialkylalkanmonocarbonsäuren die Summenformel C₃H₅O zukommt, sind die α-Alkylalkanmonocarbonsäuren und α,α-Dialkylalkansäuren Isomeren-Gemische von in α-Stellung verzweigten aliphatischen gesättigten Monocarbonsäuren mit 4 bis 30 Kohlenstoffatomen.

Die Komponente (ab) ist ein Gemisch von mindestens zwei olefinisch ungesättigten copolymerisierbaren Monomeren, von denen mindestens eines mindestens eine Carboxylgruppe enthält.

Geeignete olefinisch ungesättigte saure Monomere bei der Komponente (ab) sind einfach ungesättigte Monocarbonsäuren wie Acryl- und Methacrylsäure, (iso)-Crotonsäure und Vinylessigsäure; Halbester einfach ungesättigter Dicarbonsäuren wie Malein-, Fumar-, Methylenmalon- und Itaconsäurehalbester von gesättigten aliphatischen einwertigen Alkoholen mit 1 bis 20 Kohlenstoffatomen; einfach ungesättigte Dicarbonsäuren wie Malein-, Fumar-, Itacon- und Mesaconsäure; sowie mehrfach ungesättigte Fettsäuren mit 8 bis 22 C-Atomen, wie z.B. Linolensäure, Linolsäure, Ölsäure, Arachidonsäure und Ricinenfettsäure.

Geeignete olefinisch ungesättigte Monomere ohne Carboxylgruppen sind die Ester einfach ungesättigter Monocarbonsäuren wie z.B. Acryl- und/oder Methacrylsäureester aus einwertigen Alkoholen mit 1 bis 20 C-Atomen und die Monoester dieser Säuren von Dihydroxyverbindungen ausgewählt aus zweiwertigen Alkoholen mit 2 bis 20 Kohlenstoffatomen, sowie linearen oder verzweigten aliphatischen Polyesterdiolen und Polyoxyalkylenglykolen, den Glycidylestern dieser Säuren, den Diestern von α,β-ungesättigten Dicarbonsäuren mit ein- und/oder zweiwertigen Alkoholen mit 1 bis 20 Kohlenstoffatomen. Insbesondere geeignete Acrylester sind z.B. die Methyl-, Äthyl-, Propyl-, 2-Äthylhexyl-, Butyl-, Isobutyl-, tert.-Butyl-, Hexyl-, Nonyl-, Lauryl-, Stearyl-, 3,3,5-Trimethylcyclohexyl-, 4-tert.-Butylcyclohexyl-, Dihydrobicyclopentadienyl- und Isobornyl-ester (inkl. deren Strukturisomere) der Acryl- bzw. Methacrylsäure.

Weitere Bestandteile der Komponente (ab) können halogenierte Ester, wie z.B. Trifluoräthyl-, Pentafluor-n-propyl- und Hexachlorbicycloheptenyl-acrylat oder -methacrylat, Methyl-2-fluoracrylat oder Dibromphenyl-2-fluoracrylat sein.

Als Komponente (ab) kommen auch in Betracht geringe Mengen Glycidylester der Acryl- oder Methacrylsäure, vorzugsweise Glycidylacrylat und Glycidylmethacrylat, ebenso auch Monomere, die Silangruppen enthalten. Typische Beispiele dieser Monomeren sind Acrylatoalkoxysilane, wie γ-(Meth)Acryloxypropyltrimethoxysilan, γ-(Meth)Acryloxypropyltris(2-methoxyäthoxy)silan und Vinylalkoxysilane, wie Vinyltrimethoxysilan, Vinyltriäthoxysilan und Vinyltris(2-methoxyäthoxy)silan. Hierunter fallen auch entsprechende Acryloxysilane.

Auch in den weiter unten genannten Komponenten schließt der Begriff "α,β-ungesättigte Carbonsäuren" auch die Dicarbonsäuren wie beispielsweise Maleinsäure, Fumarsäure und Itaconsäure sowie deren Halbester ein.

Geeignete Verbindungen sind auch Amide, N-substituierte Amide wie N-Alkylamide und N,N-Dialkylamide sowie Nitrile von α,β-olefinisch ungesättigten Carbonsäuren mit bevorzugt 3 bis 22 Kohlenstoffatomen, insbesondere die Derivate der Acryl- und Methacrylsäure wie Acrylamid, Methacrylamid, N,N-Dimethylacrylamid, Acrylnitril und Methacrylnitril.

Geeignete Verbindungen sind auch Vinylester von aliphatischen linearen oder verzweigten Monocarbonsäuren wie Vinylacetat oder ®Versaticsäurevinylester (Neodecansäurevinylester). Weitere geeignete Verbindungen sind Vinylhalogenide und Vinylidenhalogenide wie Vinyl- und Vinylidenchlorid sowie Vinylketone wie Methyl- und Äthylvinylketon, Vinyläther wie Methyl- und Isobutyl-vinyläther.

Beispiele für geeignete Hydroxyalkylester α,β-ungesättigter Carbonsäuren mit einer primären Hydroxylgruppe sind Hydroxyäthylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat, Trimethylolpropandiacrylat und die entsprechenden Methacrylate genannt. Selbstverständlich können jeweils auch die entsprechenden Ester anderer α,β-ungesättigter Carbonsäuren wie z.B. der Crotonsäure und der Isocrotonsäure eingesetzt werden. Besonders bevorzugt werden Hydroxyäthyl-, Hydroxypropyl- und Hydroxybutylacrylat, bzw. -methacrylat. Geeignet sind auch Umsetzungsprodukte aus z.B. einem Mol Hydroxyäthylacrylat und/oder Hydroxyäthylmethacrylat und durchschnittlich zwei Mol ε-Caprolacton oder Ester von α,β-ungesättigten Carbonsäuren und den oligomeren Alkylenglykolen wie Oligo-äthylen- oder -propylenglykol.

Andere geeignete olefinisch ungesättigte Monomere sind vinylaromatische Kohlenwasserstoffe wie Styrol, (Alkylphenyl)äthylene, α-Methylstyrol, α-Chlorstyrol und die verschiedenen Vinyltoluole sowie Vinylnaphthalin.

Im Ausgangsmonomergemisch besteht die Komponente (ab) bevorzugt aus einem Gemisch mit Massenanteilen von
(ab1) 2 bis 25, vorzugsweise 4,5 bis 20 % einer α,β-ungesättigten Monocarbonsäure, vorzugsweise Acryl- oder Methacrylsäure oder deren Mischungen,
(ab2) 0 bis 45, vorzugsweise 10 bis 40 % eines oder mehrerer Hydroxyalkyl- oder Hydroxyalkoxyalkylester von α,β-ungesättigten Monocarbonsäuren,
(ab3) 0 bis 90, vorzugsweise 5 bis 70 % eines oder mehrerer Ester der Acryl- oder Methacrylsäure mit einem einwertigen Alkohol mit 1 bis 20 C-Atomen,
(ab4) 0 bis 90, vorzugsweise 20 bis 85 Gew.% mindestens eines Vinylaromaten,
wobei die Summe der Massenanteile der Komponenten (ab) 100 % beträgt und jeweils mindestens eine der Komponenten (ab2) bis (ab4) in Mischung mit der Komponente (ab1) vorliegt.

Während der Polymerisationsreaktion bildet sich aus den sauren Monomeren und dem vorgelegten Glycidylester ein Umsetzungsprodukt, das im erfindungsgemäß erhaltenen Copolymerisat im allgemeinen in einem Massenanteil von 20 bis 60, vorzugsweise 20 bis 50 % vorliegt.

Die Umsetzung kann unkatalysiert oder katalysiert erfolgen. Als Katalysatoren eignen sich beispielsweise Alkali-, Erdalkali- oder Übergangsmetallverbindungen wie Natrium-, Lithium-, Kalium-, Calcium-, Vanadium-, Zirkon- und Titanverbindungen.

Der Massenanteil der Initiatoren kann z.B. 0,5 bis 5, vorzugsweise bis 4, insbesondere bis 3 %, bezogen auf die Gesamtmasse der Ausgangskomponenten, betragen. Es können auch übliche Regler, wie Mercaptane bzw. Thiole eingesetzt werden.

Für die erfindungsgemäßen Copolymerisate kommen die üblichen radikalbildenden Verbindungen als Polymerisationsinitiatoren einzeln oder im Gemisch in Frage. Solche sind z.B. aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid oder Di-t-amylperoxid. Die Initiatoren können gemeinsam mit den Monomeren oder getrennt von ihnen zugesetzt werden. Während der Polymerisation können weitere Mengen von Initiatoren, gegebenenfalls in Mischung mit Reglern, zugefügt werden. Erfindungsgemäß werden jedoch bevorzugt keine Regler eingesetzt.

Die Polymerisation wird vorzugsweise in Substanz (am Polymerisationsende als "Massepolymerisation") vorgenommen. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem geringen Lösemittel-Massenanteil möglich, nämlich bis zu 20, vorzugsweise bis zu 10 und insbesondere bis zu 8 %, bezogen auf die Masse der Ausgangskomponenten. Dabei kann auch unter erhöhtem Druck polymerisiert werden. Jedoch ist das Arbeiten ohne Lösemittel vorzuziehen.

Die erfindungsgemäßen Verfahren können diskontinuierlich (sogenanntes "batch"-Verfahren) oder kontinuierlich durchgeführt werden.

Besonders bevorzugt ist eine Verfahrensweise, bei der zunächst mindestens eine Komponente gemäß (aa) zu Beginn der Polymerisation vorgelegt wird und im weiteren Verlauf mindestens zwei ungesättigte copolymerisierbare Monomere (ab) zugegeben werden, von denen mindestens eines eine COOH-Gruppe enthält. Die Komponente (aa) wird während der Polymerisation vollständig in das Copolymerisat eingebaut.

Die auf diese Weise hergestellten hydroxylgruppenhaltigen Copolymerisate können nachträglich noch modifiziert werden, z.B. durch Umsetzen mit Isocyanat-Verbindungen, die pro Molekül durchschnittlich 0,8 bis 1,5 freie NCO-Gruppen und mindestens eine tertiäre Aminogruppe enthalten. Dann muß das bei der Polymerisation, also der Herstellung der Polymeren, eingesetzte Lösemittel selbstverständlich gegenüber diesen Isocyanat-Verbindungen inert sein.

Diese Isocyanat-Verbindungen schließen beispielsweise auch alle niedermolekularen Harnstoffderivate ein, die in der Lackindustrie zu "sag controlled" Acrylatharzen führen. Hierbei werden zu den hydroxylgruppenhaltigen Copolymerisaten Umsetzungsprodukte aus Monoaminen und/oder Polyaminen und/oder Stoffen mit mindestens einer Aminogruppe mit Mono- und/oder Polyisocyanaten und/oder polymeren Stoffen mit mindestens einer Isocyanatgruppe als viskositätsregulierende Stoffe zugesetzt. Diese Umsetzungsprodukte können separat hergestellt und in die Copolymerisate oder Mischungen eingerührt werden. Bevorzugt ist jedoch die Umsetzung direkt in den Copolymerisaten oder Mischungen.

Die erfindungsgemäßen extrem niedermolekularen Polymerisate zeichnen sich durch ihren Gehalt an OH-Gruppen aus. Sie weisen eine OH-Zahl von 20 bis 250, bevorzugt von 30 bis 200 und insbesondere von 40 bis 180 mg/g auf. Zudem besitzen die Polymerisate eine besonders niedrige Lösungsviskosität. Im allgemeinen liegt sie im Bereich von 3 bis 200, vorzugsweise 5 bis 100 und insbesondere 10 bis 50 mPa•s (gemessen an einer 50%igen Lösung in Butylacetat bei 23 °C nach DIN 53 018). Die erfindungsgemäßen Polymerisate besitzen eine gewichtsmittlere molare Masse von unter 3500, besonders unter 3300 und insbesondere unter 3000 g/mol. Die Uneinheitlichkeit *U*(*U*=*M*_{w}/*M*ₙ) ist kleiner als 2,8, insbesondere kleiner als 2,5.

Die erfindungsgemäßen extrem niedermolekularen OH-funktionellen Acrylatpolymerisate können mit frei wählbaren Lösemitteln bzw. Lösemittelgemischen zu einem wählbaren Anteil angelöst werden.

Die erfindungsgemäßen Copolymerisate (a) - allein und in Mischung - eignen sich besonders gut für lacktechnische Anwendungen in Ein- bzw. Zwei-Komponenten-Systemen, insbesondere für sogenannte "high-solid" Systeme, also für lösemittelhaltige Mischungen mit hohem Festkörpergehalt.

Geeignete Lösemittel für die erfindungsgemäßen Copolymerisate (a) sind z.B. aliphatische, cycloaliphatische und aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat oder Propylenglykol-methylätheracetat; Äther, wie Äthylenglykolacetatmonoäthyl-, methyl- oder butyläther; Glykole; Alkohole; Ketone wie Methylisoamylketon, Methylisobutylketon; Lactone und Gemische derartiger Lösemittel. Als Lösemittel sind auch Umsetzungsprodukte von Lactonen mit Glykolen oder Alkoholen einsetzbar.

Gegenstand der vorliegenden Erfindung sind weiterhin Beschichtungsmittel, die die erfindungsgemäßen Copolymerisate als Bindemittelkomponente enthalten. Die Alleinkomponenten und Mischungen können in Gegenwart von geeigneten Vernetzern kalt oder bei erhöhter Temperatur gehärtet werden.

Als Härterkomponente eignen sich in diesen Beschichtungsmitteln Aminoplastharze, Polyisocyanate oder Anhydridgruppen enthaltende Verbindungen einzeln oder in Kombination. Der Vernetzer wird jeweils in solch einer Menge zugesetzt, daß das Molverhältnis der OH-Gruppen des Copolymerisats zu den reaktiven Gruppen des Vernetzers zwischen 0,3 : 1 und 3 : 1 liegt.

Als Härterkomponente geeignete Aminoplastharze sind bevorzugt Harnstoff-, Melamin- und/oder Benzoguanaminharze. Es handelt sich hierbei um verätherte Harnstoff-, Melamin- bzw. Benzoguanamin-Formaldehyd-Kondensationsprodukte. Geeignete Mischungsverhältnisse liegen im Bereich von 50 : 50 bis 90 : 10 Copolymerisat (bzw. eine das Copolymerisat enthaltende Mischung)/Aminoharzvernetzer auf die Masse des Festharzes bezogen. Geeignete Phenolharze und ihre Derivate können auch als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 90 bis 200 °C, z.B. in 10 bis 30 Minuten vorgenommen werden.

Für die Härtung der erfindungsgemäßen Produkte unter Vernetzung eignen sich Polyisocyanate, besonders bei moderaten Temperaturen bzw. bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-lsocyanato-3,3,5-trimethyl-5-isocyanatomethyl-cyclohexan (IPDI), 2,4'- und/oder 4,4'-Diisocyanato-dicyclohexylmethan, 2,4'-und/oder 4,4'-Diisocyanato-diphenylmethan oder Gemische dieser Isomeren mit ihren höheren Homologen, wie sie in an sich bekannter Weise durch Phosgenierung von Anilin/Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP-A 0 470 461 beschrieben werden.

Zu den besonders bevorzugten modifizierten Polyisocyanaten gehören das N,N',N"-Tris-(6-isocyanatohexyl)-biuret und seine Gemische mit seinen höheren Homologen, sowie das N,N',N"-Tris-(6-isocyanatohexyl)-isocyanurat bzw. dessen Gemische mit seinen höheren, mehr als einen Isocyanuratring aufweisenden Homologen.

Für eine Härtung bei erhöhter Temperatur kommen zusätzlich verkappte Polyisocyanate, Polycarbonsäuren bzw. deren Anhydride in Frage.

Die erfindungsgemäßen Copolymerisate eignen sich besonders gut zur Herstellung von festkörperreichen, lösemittelhaltigen Klar- und Decklacken sowie für Füller.

In Beschichtungsmitteln, die mit den erfindungsgemäßen Copolymerisaten hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufsmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate etc., viskositätskontrollierende Zusätze, Mattierungsmittel, UV-Absorber und Lichtschutzmittel, Antioxidantien und/oder Peroxidzersetzer, Entschäumer und/oder Netzmittel, aktive Verdünner-Reaktiwerdünner und dergleichen.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Sie können in der Wärme appliziert werden, gegebenenfalls können sie durch Eindrücken von superkritischen Lösemitteln (z.B. CO₂) in eine applikationsfertige Form gebracht werden. Autoreparatur-, Industrie-, Holz-, Kunststoff-, Baustoff- und Textillacke mit ausgezeichneten Eigenschaften lassen sich mit Bindemitteln oder Bindemittel-Mischungen erhalten, die mit den erfindungsgemäßen Copolymerisaten hergestellt werden. Diese Bindemittel können sowohl zur Herstellung von Zwischenschichten als auch von pigmentierten oder unpigmentierten Decklacken eingesetzt werden.

Hierzu werden die Lacke im allgemeinen innerhalb des Temperaturbereichs von - 20 bis + 100 °C, vorzugsweise von -10 bis + 80 °C ausgehärtet.

Die Erfindung wird in den folgenden Beispielen näher erläutert. In den Ausführungsbeispielen bedeuten alle Prozentangaben Massenanteile.

### Beispiele:

### I Herstellung der Copolymerisate

### Ia Herstellung der extrem niedermolekularen Copolymerisate

In einem mit Rührwerk, Inertgaseinleitung, Heiz- und Kühlsystem sowie einer Zugabeeinrichtung ausgestatteten Reaktor wird der Glycidylester einer α,α-Dialkylalkanmonocarbonsäure [z.B. Glycidylester der Versatic 10 Säure (Handelsname: Cardura® E 10, Shell Chemicals)] (z.T. mit Lösemittel oder Lösemittelgemischen) vorgelegt und unter Inertgas auf die gewünschte Temperatur aufgeheizt. Dann wird innerhalb 6 Stunden die Monomerenmischung (z.T. mit Lösemittel oder Lösemittelgemischen) zusammen oder getrennt mit dem Initiator (z.T. in Lösemittel oder Lösemittelgemischen) gleichmäßig zudosiert. Anschließend wird noch 2 Stunden nachpolymerisiert.

### Ib Herstellung eines "in situ" Blends

In einem mit Rührwerk, Inertgaseinleitung, Heiz- und Kühlsystem sowie einer Zugabeeinrichtung ausgestatteten Reaktor wird der Glycidylester einer α,α-Dialkylalkanmonocarbonsäure [z.B. Glycidylester der Versatic-10 Säure (Handelsname: Cardura® E 10, Shell Chemicals)] vorgelegt und unter Inertgas auf die gewünschte Temperatur (≥ 210 °C) aufgeheizt. Dann wird innerhalb von 6 Stunden die Monomerenmischung (z.T. mit Lösemittel oder Lösemittelgemischen) zusammen oder getrennt mit dem Initiator (z.T. in Lösemittel oder Lösemittelgemischen gelöst) gleichmäßig zudosiert.

Nach 2 Stunden Dosierzeit wird die Reaktionstemperatur auf Werte unter 210 °C heruntergenommen und weiter polymerisiert. Nach Dosierende wird noch 2 Stunden bei 140 °C nachpolymerisiert.

Die Copolymerisate oder "in situ" Blends werden in geeigneten Lösemitteln oder Lösemittelgemischen angelöst.

Es werden folgende Copolymerisate und Blends gemäß Tabelle 1 hergestellt. Die genauen Ansätze in Gewichtsteilen, Reaktionsbedingungen und Kennzahlen der Produkte sind aus nachstehenden Tabellen zu entnehmen.

**Tabelle 1:**

| **Herstellung und Eigenschaften eines Copolymerisates (Ia) und "in situ" Blends (Ib)** | | |
|---|---|---|
| **Ansatz** | **Ia** | **Ib** |
| **organische Verbindungen:** | | |
| **Glycidylester** | 26,81 | 27,2 |
| **Acrylsäure** | - | 7,9 |
| **Methacrylsäure** | 9,3 | - |
| **Hydroxyäthylmethacrylat** | 20,6 | 20,9 |
| **Methylmethacrylat** | - | 6,8 |
| **Styrol** | 43,3 | 37,2 |
| **Initiator** | Di-tert.-Amylperoxid 1,95 % | |
| **Polymerisation** | | |
| **Temperatur/Zeit** | 235 °C/6h | 225°C/2h. 170°C/4h |
| **Nachreaktion** | 230 °C/2h | 140 °C/2h |
| **FK (%) Lff. (in Butylacetat)** | 68,5 | 70,7 |
| **Kenndaten:** | | |
| **Säurezahl (mg/g)** | 10,1 | 13,4 |
| **Hydroxylzahl (mg / g)** | 146 | 150 |
| **Viskosität (mPa·s), 23 °C (Lff.)** | 215 | 1185 |
| **Viskosität (mPa·s), 23° C** | 15 | 36 |
| **(50 %ig in BuOAc)** | | |
| **GPC (PS-Eichung)** | unimodal | multimodal |
| **M**_{**w**} **(g/mol)** | 1770 | 3580 |
| **M**_{**n**} **(g/mol)** | 1050 | 1275 |
| **U = M**_{**w**}**/M**_{**n**} | 1,7 | 2,8 |
| **Aussehen** | transparent | transparent |
| Fk: Festkörper-Massenanteil | | |
| Lff: Lieferform | | |
| BuOAc: Butylacetat | | |
| GPC: zur Bestimmung von M_{w}, Mₙ - Millipore® Waters Chromatographie System 860 | | |
| Pumpe: Waters Model 590, Rl-Detektor: Waters Model 410 | | |
| Säulensatz: Waters Ultrastyragel 1 x 1000 Å + 1 x 500 Å + 1 x 100 Å (Ångström) | | |
| Lösungsmittel: Tetrahydrofuran bei 40 °C | | |
| Durchfluß: 1 ml/min, Konzentration: 1 %ig auf Festkörper | | |
| Kalibrierung: Polystyrol (Fa. PSS, Mainz) | | |
| Bestimmung der Kenndaten: Säurezahl, Hydroxylzahl und Viskosität (Normen siehe "Analytische Bestimmungsmethoden" (Broschüre: Kunstharze Hoechst AG, Ausgabe 1982)) | | |

Das hergestellte Copolymerisat la ist extrem niedermolekular und weist geringste Lösungsviskositäten auf. Das Produkt ist sehr einheitlich (U <2).
Das hergestellte "in situ" Blend Ib ist multimodal (U >2,5). Es besitzt eine höhere Lösungsviskosität.

### II Herstellung der Lacke

Zur Herstellung der erfindungsgemäßen härtbaren Beschichtungsmittel werden die Komponenten bestehend aus einem erfindungsgemäßen Copolymerisat oder einer Mischung mehrerer erfindungsgemäßer oder anderer Copolymerisate mit den Hilfs- und Zusatzstoffen, Lösungsmitteln und Vernetzern im beschriebenen Mischungsverhältnis (Tabelle 2) gemischt und mit weiterem Verdünnungsmittel auf die Spritzviskosität von 21 bis 22 Sekunden mit dem Auslaufbecher (DIN 52 211, 4 mm, 23 °C) eingestellt. Bei Copolymerisat-Komponenten mit niedriger Viskosität kann dies in Substanz erfolgen, wobei gegebenenfalls auf höhere Temperaturen erwärmt wird. Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit dem erfindungsgemäßen Copolymerisat oder einer Mischung mehrerer erfindungsgemäßer oder anderer Copolymerisate evtl. unter Zusatz eines geeigneten speziellen Anreibeharzes in einem Dispergieraggregat geeigneter Bauweise eine Pigmentpaste erzeugt. Diese wird so oder unter Zugabe weiteren Bindemittels auf Basis der Komponenten oder einer Mischung derselben oder aber eines Fremdharzes, das mit den übrigen Komponenten des betreffenden Lacksystems verträglich ist, gemischt und unter Zufügung weiterer Verdünnungsmittel oder lacktypischer Zusätze komplettiert. Die Topfzeit und die Eigenschaften der resultierenden Filme hängen dabei von den Verfahrensbedingungen ab, d.h. von der Art und Menge der Ausgangsstoffe, Dosierung des Katalysators, der Temperaturführung etc., die Härtung kann diskontinuierlich betrieben oder kontinuierlich durchgeführt werden, beispielsweise mittels einer automatischen Lackiervorrichtung.

**Tabelle 2:**

| **Herstellung der "high solid" Klarlacke mit Bindemittel-Blends** Als hochmolekulare Blendkomponente diente das Copolymerisat-Beispiel A2 aus der DE-P 43 24 801. | | | | |
|---|---|---|---|---|
| **Bindemittel** | **Copolymer** | **Blend** | **Copolymer** | **"in situ" Blend** |
| **Ansatz** | Vergleich A2 DE 43 24 801 | 50:50 A2:Ia | Ia | Ib |
| **Aussehen:** | transparent | transparent | transparent | transparent |
| FK in % | 70 | 69,3 | 68,5 | 70,7 |
| OH-Zahl / w(OH) in % | 136/4,1 | 141/4,2 | 146/4,4 | 150/4,5 |
| Visk. mPa·s (50% BuOAc) | 91 | 53 | 15 | 36 |
| Bindemittel | 82 | 82 | 82 | 82 |
| Tinuvin® 292 | 0,5 | 0,5 | 0,5 | 0,5 |
| Tinuvin® 1130 | 1,5 | 1,5 | 1,5 | 1,5 |
| Si Öl LO 50% 10%ig | 1 | 1 | 1 | 1 |
| Solvesso® 100 | 1,5 | 1,5 | 1,5 | 1,5 |
| Xylol | 2,5 | 2,5 | 2,5 | 2,5 |
| BuOAc | 11 | 11 | 11 | 11 |
| Desmodur®N 3390 | 29,9 | 32,7 | 34,3 | 35,2 |
| Auslaufbecher (DIN 53 211) Sekunden | 21 | 21 | 21 | 21 |
| Lackbezeichnung | Lack 1 Vergleich | Lack 2 | Lack 3 | Lack 4 |
| Solvesso®100 Lösungsmittelmischung aus unterschiedlich substitutierten Aromaten (Exxon Chemical) | | | | |
| Tinuvin®292 "HALS"(Fa. Ciba Geigy, Basel) | | | | |
| Tinuvin® 1130 UV-Absorber(Fa. Ciba Geigy, Basel) | | | | |
| Si Öl LO 50% Verlaufsmittel (Silikonöl der Fa. Wacker GmbH, Burghausen) | | | | |
| Desmodur® N 3390 Isocyanurat-Gruppen aufweisendes Polyisocyanat (Fa. Bayer AG, Leverkusen) | | | | |
| BuOAc Butylacetat | | | | |
| w(OH) Hydroxylgruppen-Massenanteil | | | | |

Die Klarlacke wurden nach obiger Standardvorverdünnung mit unterschiedlichen Mengen Verdünnung [Solvesso® 100/Xylol/Butylacetat (2:3:10)] auf 21 s eingestellt.

### III Lacktechnische Prüfung

### IIIa Klarlacke

Die wie in II gefertigten Lacksysteme sind mittels 100 µm Rakel auf gereinigte Glasplatten appliziert und unter den Bedingungen der Lufttrocknung geprüft.

**Tabelle 3:**

| **Lacktechnische Prüfung der "high solid" Klarlacke mit Bindemittel-Blends** | | | | |
|---|---|---|---|---|
| **Lackbezeichnung** | **Vergleich Lack 1** | **Lack 2** | **Lack 3** | **Lack 4** |
| Aussehen | transparent | transparent | transparent | transparent |
| Ausgng./Topbeit | > 8h | > 8h | > 8h | > 8h |
| Staubtrocknung | 10' | 33' | > 6h | 29' |
| Klebfreitrocknung | 198' | 315' | > 8h | 281' |
| FK- 1h 125°C in % | 57,3 | 62,7 | 67,9 | 62,5 |
| Pendelhärte nach | | | | |
| 24 h | 90 | 27 | 7 | 33 |
| 2 d | 185 | 58 | 14 | 71 |
| 4 d | 195 | 92 | 39 | 95 |
| 10 d | 211 | 207 | 156 | 201 |
| Superbenzin | | | | |
| nach 10 d in Min. | > 30 | > 30 | > 10 | > 30 |
| Pendelhärten nach König (Sekunden) FK Festkörperbestimmung nach DIN 53 216 d Tage, 'Minuten | | | | |

### Fazit:

Klarlacke auf Basis von Blends, d.h. Mischungen der erfindungsgemäßen extrem niedermolekularen Polyacrylatpolyole, mit normalen "high solid" Polyacrylatpolyolen zeigen eine Lackfestkörpererhöhung von bis zu 9,4 % bei gleicher Spritzviskosität. Die Beständigkeiten gegen Superbenzin sind sehr gut. Die Trocknungseigenschaften sind als ausreichend einzustufen. Nicht ausreichend sind die Beständigkeiten und Trocknungseigenschaften bei dem Alleinbindemittel - extrem niedermolekulares Polyacrylatpolyol - obgleich der Festkörpergehalt um 18,5 % bei gleicher Spritzviskosität gesteigert werden konnte.

### IIIb Pigmentierbarkeit der Lacke

Als Maß für die Pigmentierbarkeit der Lacke diente der "Ölbedarf" bis zum Netzpunkt (Glasurit Handbuch "Lacke und Farben" 10. Auflage (1969) S. 144 f.)

Es wurde eine bestimmte Pigmentmenge (5 bis 10 g) Kronos 2310 Weißpigment (Fa. Kronos Titan GmbH, Leverkusen) vorgelegt und tropfenweise mit ca. 70 %iger Lösung des Bindemittels (Copolymer A2, Copolymer Ia) bzw. der Mischung ("in situ" Blend Ib) versetzt und nach jedem Tropfen mit dem Spatel gründlich verrieben. Wenn die Masse anfängt, sich zusammenzuballen und ein dunkles Aussehen annimmt, ist der Netzpunkt erreicht (Tabelle 4).

**Tabelle 4:**

| **Pigmentierbarkeit - Netzpunkt der Bindemittel-Systeme (Massenanteil in % auf die Feststoffe bezogen)** | | | |
|---|---|---|---|
| System | Copolymer A2 (Vergleich) DE-P 43 24 801 | Copolymer Ia | "in situ" Blend Ib |
| Netzpunkt Bindemittel (Feststoff-Massenanteil) | 19,1 | 17,6 | 18,5 |

### Fazit:

Vom Vergleichspolymer wird am meisten Bindemittel gebraucht, um den Netzpunkt zu erreichen. Vom Copolymer la wird am wenigsten gebraucht, zeigt jedoch das Problem der mangelhaften Trocknung im Klarlack. Eine ausreichend rasche Trocknung und gute Pigmentierbarkeit zeigte das "in situ" Blend Ib.

## Patentansprüche

1. Polymermischungen, enthaltend Massenanteile von
5 bis 95 % von niedermolekularen Copolymeren (a) mit einer Hydroxylzahl von 20 bis 250 mg/g, einer gewichtsmittleren molaren Masse M_{w} unter 3500 g/mol, einer Uneinheitlichkeit von kleiner als 2,8 und einem Massenanteil von Bausteinen mit verzweigten Seitenketten im Copolymer von mindestens 20 %, herstellbar durch Umsetzung von
(aa) einem oder mehreren Glycidylestern von gesättigten aliphatischen Monocarbonsäuren mit einem tertiären oder quarternären α-C-Atom, und
(ab) mindestens zwei ungesättigten copolymerisierbaren Monomeren, von denen mindestens eines mindestens eine COOH-Gruppe enthält, unter den Bedingungen einer radikalischen Copolymerisation, sowie
95 bis 5 % an Copolymeren (b) mit einer gewichtsmittleren molaren Masse M_{w} größer als 3500 g/mol, deren Monomere Massenanteile von
(ba) 5 bis 50 % Glycidylestern mit 7 bis 33 C-Atomen von aliphatischen gesättigten Monocarbonsäuren mit einem tertiären oder quaternären α-C-Atom und
(bb) 95 bis 50 % von mindestens zwei ungesättigten copolymerisierbaren Monomeren, von denen mindestens eines mindestens eine -COOH-Gruppe enthält.

2. Polymermischungen nach Anspruch 1, dadurch gekennzeichnet, daß man zur Herstellung der Copolymerisate (a) Massenanteile von
(aa) 20 bis 50 % Glycidylestern mit 7 bis 33 C-Atomen von aliphatischen gesättigten Monocarbonsäuren mit einem tertiären oder quaternären α-C-Atom und
(ab) 80 bis 50 % von mindestens zwei ungesättigten copolymerisierbaren Monomeren, von denen mindestens eines mindestens eine COOH-Gruppe enthält,
wobei die Summe der Massenanteile jeweils 100 % beträgt, unter den Bedingungen einer radikalischen Copolymerisation miteinander umsetzt.

3. Polymermischungen nach Anspruch 1, dadurch gekennzeichnet, daß bei der Herstellung des Bestandteils (a) die Komponente (aa), der Glycidylester, vorgelegt und bei 210 bis 260 °C mit der Komponente (ab) und mindestens einem radikalischen Initiator in einer Substanzpolymerisation so lange umgesetzt wird, bis ein Umsetzungsgrad von mindestens 95 % erreicht ist, und die Komponente (ab) mindestens einen Massenanteil von 2,0 % eines COOH-Gruppen aufweisenden Monomeren enthält.

4. Polymermischungen nach Anspruch 1, herstellbar durch Umsetzung von
(aa) einem oder mehreren Glycidylestern von gesättigten aliphatischen Monocarbonsäuren mit einem tertiären oder quarternären α-C-Atom, und
(ab) mindestens zwei ungesättigten copolymerisierbaren Monomeren, von denen mindestens eines mindestens eine COOH-Gruppe enthält,
unter den Bedingungen einer radikalischen Copolymerisation, dadurch gekennzeichnet, daß die Umsetzung nacheinander bei mindestens zwei Reaktionstemperaturen vorgenommen wird.

5. Polymermischungen nach Anspruch 1, herstellbar durch Umsetzung von
(aa) einem oder mehreren Glycidylestern von gesättigten aliphatischen Monocarbonsäuren mit einem tertiären oder quarternären α-C-Atom, und
(ab) mindestens zwei ungesättigten copolymerisierbaren Monomeren, von denen mindestens eines mindestens eine COOH-Gruppe enthält,
unter den Bedingungen einer radikalischen Copolymerisation, dadurch gekennzeichnet, daß die Umsetzung nacheinander bei mindestens zwei Reaktionstemperaturen vorgenommen wird, wobei entweder zuerst bei der höheren Temperatur von 210 bis 260 °C umgesetzt wird und anschließend auf eine niedrigere Temperatur von 100 bis 210 °C abgekühlt wird und die Reaktion bei der niedrigeren Temperatur bis zum Erreichen des gewünschten Umsatzes weitergeführt wird,
oder die Reaktion zuerst bei der niedrigen Temperatur durchgeführt wird und nach dem Aufheizen auf die höhere Temperatur weiterreagiert wird.

6. Polymermischungen nach Anspruch 1, dadurch gekennzeichnet, daß die als Komponente (aa) verwendeten Verbindungen aus Glycidylestern von α-Alkylalkanmonocarbonsäuren und Glycidylestern von α,α-Dialkylalkanmonocarbonsäuren ausgewählt und einzeln oder im Gemisch verwendet werden.

7. Polymermischungen nach Anspruch 1, dadurch gekennzeichnet, daß die Komponente (ab) ein Gemisch ist von mindestens zwei olefinisch ungesättigten copolymerisierbaren Monomeren, von denen mindestens eines mindestens eine Carboxylgruppe enthält.

8. Polymermischungen nach Anspruch 1, dadurch gekennzeichnet, daß die Komponente (ab) mindestens eine Verbindung enthält ausgewählt aus Acryl- und Methacrylsäure; Malein-, Fumar-, Itaconsäurehalbestern von gesättigten aliphatischen einwertigen Alkoholen mit 1 bis 20 Kohlenstoffatomen, Malein-, Fumar-, Itaconsäure sowie Croton-, Isocroton-, und Vinylessigsäure sowie mehrfach ungesättigten Fettsäuren mit 8 bis 22 Kohlenstoffatomen.

9. Polymermischungen nach Anspruch 1, dadurch gekennzeichnet, daß die Komponente (ab) mindestens ein olefinisch ungesättigtes Monomer ohne Carboxylgruppen enthält ausgewählt aus den Estern von einfach ungesättigten Monocarbonsäuren mit einwertigen Alkoholen mit 1 bis 20 Kohlenstoffatomen und den Monoestern dieser Säuren von Dihydroxyverbindungen ausgewählt aus zweiwertigen Alkoholen mit 2 bis 20 Kohlenstoffatomen, sowie linearen oder verzweigten aliphatischen Polyesterdiolen und Polyoxyalkylenglykolen, den Glycidylestern dieser Säuren, den Diestern von α,β-ungesättigten Dicarbonsäuren mit ein- und/oder zweiwertigen Alkoholen mit 1 bis 20 Kohlenstoffatomen, sowie Amiden, N-substituierten Amiden und Nitrilen von olefinisch ungesättigten Carbonsäuren mit 3 bis 22 Kohlenstoffatomen und Vinylestern von aliphatischen linearen oder verzweigten Monocarbonsäuren, Vinylaromaten, Vinylhalogeniden und Vinylidenhalogeniden, Vinylketonen und Vinyläthern.

10. Polymermischungen nach Anspruch 1, dadurch gekennzeichnet, daß die Komponente (ab) aus Massenanteilen von
(ab1) 2 bis 25 % einer oder mehrerer α,β-ungesättigten Monocarbonsäuren,
(ab2) 0 bis 45 % eines oder mehrerer Hydroxyalkyl- oder Hydroxyalkoxyalkylesters von α,β-ungesättigten Monocarbonsäuren
(ab3) 0 bis 90 % eines Esters der Acryl- oder Methacrylsäure mit einem einwertigen Alkohol mit 1 bis 20 C-Atomen oder dessen Mischungen,
(ab4) 0 bis 90 % mindestens eines Vinylaromaten besteht,
wobei mindestens eine der Komponenten (ab2) bis (ab4) neben (ab1) in der Mischung vorhanden ist und die Summe der Massenanteile der Komponenten (ab) stets 100 % beträgt.

11. Verfahren zur Herstellung von Polymermischungen nach Anspruch 1, dadurch gekennzeichnet, daß ein Gemisch von
(aa) einem oder mehreren Glycidylestern von gesättigten aliphatischen Monocarbonsäuren mit einem tertiären oder quarternären α-C-Atom, und
(ab) mindestens zwei ungesättigten copolymerisierbaren Monomeren, von denen mindestens eines mindestens eine COOH-Gruppe enthält,
unter den Bedingungen einer radikalischen Copolymerisation umgesetzt wird, wobei die Umsetzung nacheinander bei zwei Reaktionstemperaturen vorgenommen wird, wobei eine Reaktionstemperatur zwischen 210 und 260 °C liegt, und wobei die Zusammensetzung der Monomeren während der Dauer der Umsetzung durch kontinuierliches oder diskontinuierliches Zudosieren von einzelnen Komponenten oder deren Mischungen geändert werden kann, und
entweder zuerst bei der höheren Temperatur von 210 bis 260 °C umgesetzt wird und anschließend auf eine niedrigere Temperatur von 100 bis 210 °C abgekühlt wird und die Reaktion bei der niedrigeren Temperatur bis zum Erreichen des gewünschten Umsatzes weitergeführt wird,
oder die Reaktion zuerst bei der niedrigen Temperatur durchgeführt wird und nach dem Aufheizen auf die höhere Temperatur weiterreagiert wird.

12. Bindemittel für Beschichtungen enthaltend Polymermischungen nach Anspruch 1.

13. Bindemittel für Beschichtungen enthaltend Polymermischungen nach Anspruch 2.

14. Bindemittel für Beschichtungen enthaltend Polymermischungen nach Anspruch 3.

15. Bindemittel für Beschichtungen enthaltend Polymermischungen nach Anspruch 5.

16. Beschichtungsmittel enthaltend mindestens ein Bindemittel nach einem der Ansprüche 12 bis 15 und mindestens einen Härter ausgewählt aus der Gruppe der Aminoplastharze, der verkappten und unverkappten mehrfunktionellen Isocyanate und der organischen Verbindungen mit Säure- und/oder Säureanhydridgruppen.

## Claims

1. A polymer blend comprising mass fractions of
from 5 to 95% of low molecular mass copolymers (a) having a hydroxyl number of from 20 to 250 mg/g, a weight-average molar mass M_{w} of below 3500 g/mol, a polydispersity of less than 2.8 and a mass fraction of building blocks having branched side chains in the copolymer of at least 20%, preparable by reacting
(aa) one or more glycidyl esters of saturated aliphatic monocarboxylic acids having a tertiary or quaternary α carbon atom, and
(ab) at least two unsaturated copolymerizable monomers of which at least one comprises at least one COOH group, under the conditions of a free-radical copolymerization, and
from 95 to 5% of copolymers (b) having a weight-average molar mass M_{w} of greater than 3500 g/mol, whose monomers include mass fractions of
(ba) from 5 to 50% of glycidyl esters, of 7 to 33 carbon atoms, of aliphatic saturated monocarboxylic acids having a tertiary or quaternary α carbon atom, and
(bb) from 95 to 50% of at least two unsaturated copolymerizable monomers of which at least one comprises at least one -COOH group.

2. A polymer blend as claimed in claim 1, wherein the copolymers (a) are prepared by reacting mass fractions of
(aa) from 20 to 50% of glycidyl esters, of 7 to 33 carbon atoms, of aliphatic saturated monocarboxylic acids having a tertiary or quaternary α carbon atom and
(ab) from 80 to 50% by weight of at least two unsaturated copolymerizable monomers of which at least one comprises at least one COOH group,
the sum of the mass fractions being in each case 100%, with one another under the conditions of a free-radical copolymerization.

3. A polymer blend as claimed in claim 1, wherein for the preparation of the constituent (a) component (aa), the glycidyl ester, is introduced as initial charge and is reacted at from 210 to 260°C with component (ab) and with at least one free-radical initiator in a bulk polymerization until a degree of reaction of at least 95% has been reached, and component (ab) comprises at least a proportion by mass of 2.0% of a monomer having COOH groups.

4. A polymer blend as claimed in claim 1, preparable by reacting
(aa) one or more glycidyl esters of saturated aliphatic monocarboxylic acids having a tertiary or quaternary α carbon atom, and
(ab) at least two unsaturated copolymerizable monomers of which at least one comprises at least one COOH group,
under the conditions of a free-radical copolymerization, wherein the reaction is performed in succession at at least two reaction temperatures.

5. A polymer blend as claimed in claim 1, preparable by reacting
(aa) one or more glycidyl esters of saturated aliphatic monocarboxylic acids having a tertiary or quaternary α carbon atom, and
(ab) at least two unsaturated copolymerizable monomers of which at least one comprises at least one COOH group,
under the conditions of a free-radical copolymerization, wherein the reaction is performed in succession at at least two reaction temperatures, where a reaction is carried out either first at the higher temperature of from 210 to 260°C and then the reaction mixture is cooled to a lower temperature of from 100 to 210°C and the reaction is continued at the lower temperature until the desired conversion is achieved, or the reaction is carried out first at the low temperature and reaction is then continued after heating to the higher temperature.

6. A polymer blend as claimed in claim 1, wherein the compounds used as component (aa) are selected from glycidyl esters of α-alkylalkanemonocarboxylic acids and glycidyl esters of α,α-dialkylalkanemonocarboxylic acids and are used individually or in a mixture.

7. A polymer blend as claimed in claim 1, wherein component (ab) is a mixture of at least two olefinically unsaturated copolymerizable monomers of which at least one comprises at least one carboxyl group.

8. A polymer blend as claimed in claim 1, wherein component (ab) comprises at least one compound selected from acrylic and methacrylic acid; maleic, fumaric, itaconic monoesters of saturated aliphatic monohydric alcohols of 1 to 20 carbon atoms, maleic, fumaric, itaconic acid and also crotonic, isocrotonic and vinylacetic acid, and polyunsaturated fatty acids of 8 to 22 carbon atoms.

9. A polymer blend as claimed in claim 1, wherein component (ab) comprises at least one olefinically unsaturated monomer without carboxyl groups, selected from the esters of monounsaturated monocarboxylic acids with monohydric alcohols of 1 to 20 carbon atoms and the monoesters of these acids of dihydroxy compounds selected from dihydric alcohols of 2 to 20 carbon atoms, and also linear or branched aliphatic polyesterdiols and polyoxyalkylene glycols, the glycidyl esters of these acids, the diesters of α,β-unsaturated dicarboxylic acids with mono- and/or dihydric alcohols of 1 to 20 carbon atoms, and also amides, N-substituted amides and nitriles of olefinically unsaturated carboxylic acids of 3 to 22 carbon atoms and vinyl esters of aliphatic linear or branched monocarboxylic acids, vinylaromatic compounds, vinyl halides and vinylidene halides, vinyl ketones and vinyl ethers.

10. A polymer blend as claimed in claim 1, wherein component (ab) comprises mass fractions of
(ab1) from 2 to 25% of one or more α,β-unsaturated monocarboxylic acids,
(ab2) from 0 to 45% of one or more hydroxyalkyl or hydroxyalkoxyalkyl esters of α,β-unsaturated monocarboxylic acids,
(ab3) from 0 to 90% of an ester of acrylic or methacrylic acid with a monohydric alcohol of 1 to 20 carbon atoms, or mixtures thereof,
(ab4) from 0 to 90% of at least one vinylaromatic compound,
where at least one of components (ab2) to (ab4) is present in the mixture in addition to (ab1) and the sum of the mass fractions of the components (ab) is always 100%.

11. A process for preparing a polymer blend as claimed in claim 1, which comprises reacting a mixture of
(aa) one or more glycidyl esters of saturated aliphatic monocarboxylic acids having a tertiary or quaternary α carbon atom, and
(ab) at least two unsaturated copolymerizable monomers of which at least one comprises at least one COOH group,
under the conditions of a free-radical copolymerization, wherein the reaction is performed in succession at two reaction temperatures, where one reaction temperature lies between 210 and 260°C and where the composition of the monomers throughout the reaction can be changed by continuous or discontinuous metered addition of individual components or mixtures thereof, and
the reaction is either carried out first at the higher temperature of from 210 to 260°C and then the reaction mixture is cooled to a lower temperature of from 100 to 210°C and the reaction is continued at the lower temperature until the desired conversion is achieved,
or the reaction is carried out first at the low temperature and reaction is then continued after heating to the higher temperature.

12. A binder for coatings, comprising a polymer blend as claimed in claim 1.

13. A binder for coatings, comprising a polymer blend as claimed in claim 2.

14. A binder for coatings, comprising a polymer blend as claimed in claim 3.

15. A binder for coatings, comprising a polymer blend as claimed in claim 5.

16. A coating composition comprising at least one binder as claimed in one of claims 12 to 15 and at least one curing agent selected from the group of amino resins, blocked and nonblocked polyfunctional isocyanates, and organic compounds having acid groups and/or acid anhydride groups.

## Revendications

1. Mélanges de polymères contenant des proportions en masse de
5 à 95 % de copolymère de faible masse molaire (a) ayant un indice d'hydroxyle de 20 à 250 mg/g, une masse molaire M_{w} moyenne en poids inférieure à 3500 g/mol, une hétérogénéité inférieure à 2,8 et une proportion en masse de constituant à chaînes latérales ramifiées dans le copolymère inférieure à 20 %, qui peuvent être préparés par réaction de :
(aa) un ou plusieurs esters glycidyliques d'acide monocarboxyliques aliphatiques saturés avec un atome α-C tertiaire ou quaternaire, et
(ab) au moins deux monomères copolymérisables insaturés, dont au moins un contient au moins un groupe COOH, dans les conditions d'une copolymérisation radicalaire, ainsi que
95 à 5 % de copolymères (b) ayant une masse molaire moyenne en poids M_{w} supérieure à 3500 g/mol, dont les proportions en masse de monomères sont de :
(ba) 5 à 50 % d'esters glycidyliques, avec 7 à 33 atomes de C d'acides monocarboxyliques saturés aliphatiques ayant un atome α-C tertiaire ou quaternaire, et
(bb) 95 à 50 % d'au moins deux monomères copolymérisables insaturés, dont au moins un contient au moins un groupe COOH.

2. Mélanges de polymères selon la revendication 1, caractérisés en ce que pour la préparation des copolymères (a), on fait réagir ensemble des proportions en masse de :
(aa) 20 à 50 % d'esters glycidyliques avec 7 à 33 atomes de C d'acides monocarboxyliques saturés aliphatiques avec un atome α-C tertiaire ou quaternaire, et
(ab) 80 à 50 % d'au moins deux monomères copolymérisables insaturés dont au moins un contient au moins un groupe COOH,
la somme des proportions en masse représentant dans chaque cas 100 %, dans les conditions d'une copolymérisation radicalaire.

3. Mélanges de polymères selon la revendication 1, caractérisés en ce que lors de la préparation du constituant (a), on introduit d'abord le composant (aa), l'ester glycidylique, et on fait réagir à une température de 210 à 260°C avec le composant (ab) et au moins un amorceur radicalaire dans une polymérisation de substance, jusqu'à obtention d'un taux de réaction d'au moins 95 %, et que le composant (ab) contienne au moins une proportion en masse de 2,0 % d'un monomère présentant un groupe COOH.

4. Mélanges de polymères selon la revendication 1, qui peuvent être obtenus par réaction de :
(aa) un ou plusieurs esters glycidyliques d'acides monocarboxyliques aliphatiques saturés ayant un atome α-C tertiaire ou quaternaire,
(ab) au moins deux monomères copolymérisables insaturés, dont au moins un contient au moins un groupe COOH,
dans les conditions d'une copolymérisation radicalaire, caractérisés en ce que la réaction est effectuée successivement à au moins deux températures de réaction.

5. Mélanges de polymères selon la revendication 1, qui peuvent être obtenus par réaction de :
(aa) un ou plusieurs esters glycidyliques d'acides monocarboxyliques aliphatiques saturés ayant un atome α-C tertiaire ou quaternaire, et
(ab) au moins deux monomères copolymérisables insaturés, dont au moins un contient au moins un groupe COOH,
dans les conditions d'une copolymérisation radicalaire, caractérisés en ce que la réaction est effectuée successivement à au moins deux températures de réaction, soit en faisant réagir d'abord à la température plus élevée de 210 à 260°C et en refroidissant ensuite à une température inférieure de 100 à 210°C, et en poursuivant la réaction à la température inférieure, jusqu'à obtention de la transformation souhaitée, soit en effectuant d'abord la réaction à la température basse, et en faisant réagir encore à la température plus élevée, après réchauffement.

6. Mélanges de polymères selon la revendication 1, caractérisés en ce que les composés utilisés en tant que composant (aa) sont choisis parmi les esters glycidyliques d'acides α-alkylalcane-monocarboxyliques et les esters glycidyliques d'acides α,α-dialkylalcane-monocarboxyliques et sont utilisés individuellement ou en mélange.

7. Mélanges de polymères selon la revendication 1, caractérisés en ce que le composant (ab) est un mélange d'au moins deux monomères copolymérisables oléfiniquement insaturés, dont au moins un contient au moins un groupe carboxyle.

8. Mélanges de polymères selon la revendication 1, caractérisés en ce que le composant (ab) contient au moins un composé choisi parmi l'acide acrylique et l'acide méthacrylique ; les semi-esters de monoalcools aliphatiques saturés avec 1 à 20 atomes de carbone et de l'acide maléique, fumarique, itaconique, l'acide maléique, l'acide fumarique, l'acide itaconique, ainsi que l'acide crotonique, l'acide isocrotonique et l'acide vinylacétique, ainsi que les acides gras avec 8 à 22 atomes de carbone, plusieurs fois insaturés.

9. Mélanges de polymères selon la revendication 1, caractérisés en ce que le composant (ab) contient au moins un monomère éthyléniquement insaturé sans groupes carboxyle, choisi parmi les esters d'acides monocarboxyliques simplement insaturés, avec des monoalcools ayant 1 à 20 atomes de carbone, et les monoesters de ces acides avec des composés dihydroxy choisis parmi les bialcools ayant 2 à 20 atomes de carbone, ainsi que les polyester-diols et les polyoxyalkylèneglycols aliphatiques, linéaires ou ramifiés, les esters glycidyliques de ces acides, les diesters d'acides dicarboxyliques α,β-insaturés avec des mono- et/ou des dialcools ayant 1 à 20 atomes de carbone, ainsi que les amides, les amides N-substitués et les nitriles d'acides carboxyliques oléfiniquement insaturés ayant 3 à 22 atomes de carbone et les esters vinyliques d'acides monocarboxyliques linéaires ou ramifiés, aliphatiques, les composés vinylaromatiques, les halogénures de vinyle et les halogénures de vinylidène, les cétones vinyliques, et les éthers vinyliques.

10. Mélanges de polymères selon la revendication 1, caractérisés en ce que le composant (ab) est constitué de proportions en masse de :
(ab1) 2 à 25 % d'un ou de plusieurs acides monocarboxyliques α,β-insaturés,
(ab2) 0 à 45 % d'un ou de plusieurs esters hydroxyalkyliques ou hydroxyalkoxyalkyliques d'acides monocarboxyliques α,β-insaturés,
(ab3) 0 à 90 % d'un ester de l'acide acrylique ou méthacrylique avec un monoalcool comprenant 1 à 20 atomes de C, ou de ses mélanges,
(ab4) 0 à 90 % d'au moins un composé vinylaromatique, au moins l'un des composants (ab2) à (ab4) étant présent dans le mélange conjointement avec le composant (ab1), et la somme des proportions en masse des composants (ab) étant toujours de 100 %.

11. Procédé de préparation des mélanges de polymères selon la revendication 1, caractérisé en ce que l'on fait réagir ensemble un mélange de :
(aa) un ou plusieurs esters glycidyliques d'acides monocarboxyliques aliphatiques saturés avec un atome α-C tertiaire ou quaternaire, et
(ab) au moins deux monomères copolymérisables insaturés, dont au moins un contient au moins un groupe COOH,
dans les conditions d'une copolymérisation radicalaire, caractérisé en ce que la réaction est effectuée successivement à deux températures de réaction, une température de réaction étant comprise entre 210 et 260°C, et la composition des monomères pendant la durée de la réaction pouvant être modifiée par addition dosée en continu ou en discontinu de composants individuels ou de leurs mélanges, et
soit l'on fait réagir d'abord à la température plus élevée de 210 à 260°C et ensuite on refroidit à une température inférieure de 100 à 210°C et on poursuit la réaction à la température plus basse jusqu'à obtention de la conversion souhaitée, soit on effectue d'abord la réaction à la température plus basse, et on fait encore réagir, après chauffage, à la température plus élevée.

12. Liant pour revêtements contenant des mélanges de polymères selon la revendication 1.

13. Liant pour revêtements contenant des mélanges de polymères selon la revendication 2.

14. Liant pour revêtements contenant des mélanges de polymères selon la revendication 3.

15. Liant pour revêtements contenant des mélanges de polymères selon la revendication 5.

16. Agent de revêtement contenant au moins un liant selon l'une des revendications 12 à 15, et au moins un durcisseur choisi dans le groupe des résines aminoplastes, des isocyanates plurifonctionnels encapsulés et non encapsulés, et des composés organiques présentant des groupes acide et/ou anhydride d'acide.
